# EUROPÄISCHE PATENTSCHRIFT

(11) **EP 4 054 307 B1**
(45) Veröffentlichungstag und Bekanntmachung des Hinweises auf die Patenterteilung: **25.02.2026**
(21) Anmeldenummer: 20801190.8
(22) Anmeldetag: 02.11.2020
(51) Int. Cl.: A01C 7/04, A01C 7/08

(54) **SÄMASCHINE UND VERFAHREN ZUM VEREINZELN UND AUSBRINGEN VON KÖRNIGEM GUT**
PLANTING MACHINE AND METHOD FOR SINGULATING AND DISTRIBUTING GRANULAR MATERIAL
SEMOIR ET PROCÉDÉ À SÉPARER ET DISTRIBUER MATERIEL GRANULAIRE

(30) Priorität: 08.11.2019 DE 102019130231
(43) Veröffentlichungstag der Anmeldung: 14.09.2022
(73) Patentinhaber: Amazonen-Werke H. Dreyer SE & Co. KG, 49205 Hasbergen (DE)
(72) Erfinder: FLUCKE, Jan, 27798 Hude (DE); LUEBBEN, Jan-Eike, 26188 Edewecht (DE); WIEN, Thomas, 28816 Stuhr (DE)
(86) Internationale Anmeldenummer: PCT/EP2020/080618
(87) Internationale Veröffentlichungsnummer: WO 2021/089448

(56) Entgegenhaltungen:
- EP-A1- 2 496 063
- EP-A1- 3 335 535
- EP-A1- 3 704 923
- EP-B1- 2 854 500

## Beschreibung

Die Erfindung betrifft eine Sämaschine zum Vereinzeln und Ausbringen von körnigem Gut, wie Saatgut, Dünger oder Pestizid, gemäß dem Oberbegriff des Anspruchs 1 sowie ein entsprechendes Verfahren gemäß dem Oberbegriff des Anspruchs 7.

Eine gattungsgemäße Sämaschine und ein gattungsgemäßes Verfahren sind aus der EP 2 854 500 B1 bekannt. Demnach wird körniges Gut mehreren Dosiervorrichtungen über jeweils zugeordnete Förderkanäle aus einem zentralen Behälter mittels Förderluftströmen zugeführt. Das körnige Gut wird aus den Förderluftströmen in Abscheidevorrichtungen abgeschieden und den jeweils zugeordneten Dosiervorrichtungen zugeführt. Diesen werden über Versorgungskanäle ferner Versorgungsluftströme zugeführt, die beispielsweise mittels eines separaten Gebläses erzeugt werden und dazu dienen, die Dosiervorrichtungen mit Überdruck zu beaufschlagen. Dieser wird benötigt, um darin vorhandene Vereinzelungsscheiben möglichst kontrolliert mit dem körnigen Gut zu belegen, das dann derart vereinzelt über einen Saatgutkanal abgegeben wird.

Aus der Abscheidung des Guts in den Abscheidevorrichtungen resultierende Abluftströme werden über Abluftkanäle in die einzelnen Versorgungskanäle geleitet und dann gemeinsam mit den Versorgungsluftströmen den jeweils zugeordneten Dosiervorrichtungen zugeführt. Um die Abluft in den Versorgungskanälen effektiv mit den Versorgungsluftströmen zu vermengen, sollten die jeweils zusammengeführten Luftströme vergleichbare Druckniveaus aufweisen. Bei dem Versorgungsluftstrom treten jedoch aufgrund des hohen Volumenluftstroms Druckverluste auf, so dass im Bereich des Versorgungskanals zwangsläufig ein höherer Druck herrscht als im Bereich der Dosiervorrichtung, um den dort erforderlichen Druck zu erreichen. Bedingt durch diese Druckdifferenz und die Bedingungen zum Einleiten der Abluft in die Versorgungsluftströme herrschen ebenfalls im Bereich des abgeschiedenen Guts, im nach unten hin anschließenden Saatgutkanal und in der zugeordneten Dosierkammer vergleichsweise hohe Druckniveaus.

Es hat sich nun in überraschender Weise herausgestellt, dass diese hohen Druckniveaus das übliche Durchrühren des körnigen Guts im Eingangsbereich der Dosiervorrichtung behindern und zu einer fehlerhaften Belegung der Vereinzelungsscheibe mit dem körnigen Gut führen können. Dies verschlechtert die Vereinzelungsqualität.

Die EP 3 335 535 A1 offenbart eine Sämaschine nach dem Oberbegriff des Anspruchs 1.

Es besteht daher Bedarf für diesbezüglich verbesserte Sämaschinen und Verfahren zum Vereinzeln und Ausbringen von körnigem Gut, wie Saatgut, Dünger, Pestizid oder dergleichen.

Die gestellte Aufgabe wird mit einer Sämaschine gemäß Anspruch 1 und einem Verfahren gemäß Anspruch 7 gelöst.

Demnach umfasst die Sämaschine mindestens zwei Dosiervorrichtungen mit Dosierkammern und darin angeordneten Vereinzelungsscheiben zur Vereinzelung des körnigen Guts sowie wenigstens ein Gebläse zum Erzeugen von Versorgungsluftströmen zur Überdruckbeaufschlagung der einzelnen Dosierkammern über diesen jeweils zugeordnete Versorgungskanäle und zum Erzeugen von Förderluftströmen zum Zuführen des körnigen Guts aus einem zentralen Behälter zu den einzelnen Dosiervorrichtungen über diesen jeweils zugeordnete Förderkanäle. Außerdem umfasst die Sämaschine Abscheidevorrichtungen, die im Bereich der Dosiervorrichtungen diesen jeweils vorgeschaltet sind, um das in den Förderkanälen zugeführte Gut aus dem jeweiligen Förderluftstrom abzuscheiden und daraus resultierende Abluftströme über Abluftkanäle den jeweils zugeordneten Dosiervorrichtungen zu deren Überdruckbeaufschlagung bereitzustellen.

Erfindungsgemäß münden die Versorgungskanäle und die Abluftkanäle voneinander getrennt in die diesen jeweils gemeinsam zugeordneten Dosierkammern.

In den Dosierkammern herrscht in Arbeitsbetrieb zwangsläufig ein niedrigerer Druck als in den jeweils zugeordneten Versorgungskanälen. Da die Abluftkanäle direkt in die Dosierkammern münden, im Gegensatz zum bekannten Einmünden der Abluftkanäle in die Versorgungskanäle stromaufwärts der Dosierkammern, können die Abluftkanäle auf einem niedrigeren Druckniveau gehalten werden und somit der Druck in der jeweils zugeordneten Abscheidevorrichtung gegenüber bekannten Sämaschinen mit Saatgutnachführung verringert werden. Folglich kann auch das Druckniveau im Bereich des an die Abscheidevorrichtung anschließenden Saatgutkanals reduziert werden.

Dadurch kann das dort nachrückende körnige Gut besser durchgerührt und ein übermäßiges Andrücken des körnigen Guts an der Vereinzelungsscheibe vermieden werden kann. Beispielsweise lässt sich verhindern, dass das körnige Gut zu stark an Stellen der Vereinzelungsscheibe haftet, die nicht zu belegen sind und die Zufuhr des körnigen Guts zu den dafür vorgesehenen Vertiefungen in der Vereinzelungsscheibe behindert. Zudem wird das Abstreifen der Vereinzelungsscheibe vereinfacht.

Dadurch verbessert sich insgesamt die Belegung der Vereinzelungsscheiben mit dem körnigen Gut und folglich die Vereinzelungsqualität der Dosiervorrichtungen.

Vorzugsweise münden die Abluftkanäle in Teilbereiche der Dosierkammern, in denen ein Förderweg der Vereinzelungsscheiben nach oben hin verläuft. Üblicherweise sammelt sich in einem unteren Bereich der Vereinzelungsscheibe das von oben durch den Saatgutkanal nachrückende körnige Gut. Im Anschluss daran verläuft der Förderweg an der Vereinzelungsscheibe entlang einer Kreisbahn nach oben, wobei das körnige Gut von der Vereinzelungsscheibe aufgenommen wird.

Ebenfalls im aufsteigenden Teil des Förderwegs liegt eine Abstreifeinrichtung zum Abstreifen überschüssigen körnigen Guts von der Vereinzelungsscheibe. Durch gezieltes Richten der Abluftströme auf den nach oben verlaufenden Teil des Förderwegs lässt sich das Belegen der Vereinzelungsscheibe mit dem körnigen Gut und das Abstreifen der Vereinzelungsscheibe günstig beeinflussen.

Vorzugsweise sind in den Dosierkammern Abstreifelemente zum Abstreifen der Vereinzelungsscheiben angeordnet, wobei die Abluftkanäle, bezogen auf einen Förderweg der Vereinzelungsscheiben, stromaufwärts der Abstreifelemente und/oder in deren Bereich einmünden. Dadurch lässt sich beispielsweise körniges Gut, das auf einem an der Abstreifeinrichtung vorhanden Halter für die Verstellung der Abstreifer liegen geblieben ist, abblasen.

Erfindungsgemäß umfasst die Sämaschine in einer ersten wahlweisen Ausgestaltung wenigstens einen stromabwärts des Gebläses angeordneten Luftverteiler zum Einstellen der Förderluftströme und der Versorgungsluftströme derart, dass der den einzelnen Dosiervorrichtungen zugeführte Abluftstrom schwächer ist als der zugeführte Versorgungsluftstrom, insbesondere höchstens halb so stark. Beispielsweise ist der Volumenstrom des Versorgungsluftstroms dann zweimal bis fünfmal größer als der gleichzeitig zugeführte Volumenstrom des Abluftstroms.

Dadurch kann das für die Vereinzelung erforderliche Überdruckniveau in der Dosierkammer überwiegend mit dem Versorgungsluftstrom hergestellt werden und der Abluftstrom zur gezielten Ergänzung der Überdruckbeaufschlagung in einem Bereich der Abstreifeinrichtung und/oder stromabwärts davon verwendet werden.

Ein Luftverteiler eignet sich im Zusammenhang mit einem hinsichtlich der Förderleistung einstellbaren Gebläse dazu, sowohl einen für die jeweilige Nachführung des körnigen Guts erforderlichen Förderluftstrom einzustellen, als auch mit Hilfe des Versorgungsluftstroms ein geeignetes Druckniveau innerhalb der Dosierkammer herzustellen. Separate Gebläse zum Erzeugen der Förderluftströme und der Versorgungsluftströme sind dann entbehrlich.

Bei einer zweiten erfindungsgemäßen wahlweisen Ausgestaltung der Sämaschine umfasst diese wenigstens ein erstes Gebläse zum Erzeugen der Förderluftströme und wenigstens ein unabhängig davon einstellbares zweites Gebläse zum Erzeugen der Versorgungsluftströme. Dabei sind das erste und zweite Gebläse derart ausgebildet und steuerbar, dass der den einzelnen Dosiervorrichtungen zugeführte Abluftstrom, insbesondere den Volumenstrom betreffend, schwächer ist als der zugeführte Versorgungsluftstrom, insbesondere ebenfalls den Volumenstrom betreffend, vorzugsweise höchstens halb so stark. Insbesondere ist der Volumenstrom des Versorgungsluftstroms dann zweimal bis fünfmal so groß wie der Volumenstrom des Abluftstroms. Die Förderluftströme und die Versorgungsluftströme lassen sich dann vergleichsweise flexibel und auf einfache Weise unabhängig voneinander regeln.

Bei einer weiteren günstigen Ausgestaltung umfasst die Sämaschine ferner den Abluftkanälen und/oder Versorgungskanälen zugeordnete Ventile zum einstellbaren Abschwächen der Abluftströme und/oder Versorgungsluftströme derart, dass ein Mischungsverhältnis den einzelnen Dosiervorrichtungen zugeführten Abluftstrom und Versorgungsluftstrom einstellbar ist. Insbesondere ist der Abluftstrom schwächer als der zugeführte Versorgungsluftstrom, insbesondere höchstens halb so stark. Insbesondere ist der Volumenstrom des Versorgungsluftstroms dann zweimal bis fünfmal so groß wie der Volumenstrom des Abluftstroms.

Dadurch lässt sich der Volumenstrom des Abluftstroms auch unabhängig von dem in der zugeordneten Abscheidevorrichtung eingangsseitig herrschenden Druckniveau abschwächen. Dies ist insbesondere im Zusammenhang mit einem zentralen Luftverteiler oder separaten Gebläsen, wie oben beschrieben, vorteilhaft.

Vorzugsweise umfasst die Sämaschine ferner wenigstens eine Messeinrichtung zum Messen eines Volumenstroms und/oder eines Überdrucks in wenigstens einer der Abscheidevorrichtungen und/oder Abluftkanäle. Auf dieser Grundlage lassen sich Volumenströme der Abluft auch bei wechselnden Arbeitsbedingungen an Sollwerte anpassen im Sinne einer gezielten und reproduzierbaren Einspeisung von Abluftströmen in die Dosiervorrichtungen.

Das beschriebene Verfahren dient zum Vereinzeln und Ausbringen von körnigem Gut, wie Saatgut, Dünger, Pestizid oder dergleichen. Zu diesem Zweck leitet man das körnige Gut mittels Förderluftströmen aus einem zentralen Behälter in Dosiervorrichtungen über jeweils zugeordnete Förderkanäle, wobei das in den Förderkanälen zugeführte Gut aus dem jeweiligen Förderluftstrom abgeschieden wird und daraus resultierende Abluftströme über Abluftkanäle den jeweils zugeordneten Dosiervorrichtungen zugeführt und diese dadurch mit Überdruck beaufschlagt werden. Die Dosierkammern werden ferner über jeweils zugeordnete Versorgungskanäle mittels Versorgungsluftströmen mit Überdruck beaufschlagt. Das körnige Gut wird in den Dosierkammern mittels Vereinzelungsscheiben vereinzelt.

Erfindungsgemäß werden die Versorgungsluftströme und die Abluftströme örtlich voneinander getrennt in die Dosierkammern eingespeist. Damit lassen sich die bezüglich der erfindungsgemäßen Sämaschine beschriebenen Vorteile erzielen.

Vorzugsweise werden die Abluftströme, bezogen auf einen Förderstrom des körnigen Guts an den Vereinzelungsscheiben, stromaufwärts der Versorgungsluftströme in die Dosierkammern eingespeist. Dadurch lässt sich ein Sammelbereich für das körnige Gut in der Dosierkammer gezielt mit dem Abluftstrom beaufschlagen, beispielsweise um das Durchrühren des körnigen Guts zu unterstützen und/oder das Belegen und Abstreifen der Vereinzelungsscheibe zu erleichtern.

Vorzugsweise werden die Abluftströme auf in den Dosierkammern vorhandene Abstreifeinrichtungen für die Vereinzelungsscheiben und/oder stromaufwärts davon gelegene Teilbereiche der Dosierkammern gerichtet. Dadurch lässt sich beispielsweise körniges Gut, das auf einem an der Abstreifeinrichtung vorhanden Halter für die Verstellung der Abstreifer liegen geblieben ist, abblasen.

Erfindungsgemäß sind die eingespeisten Versorgungsluftströme stärker als die eingespeisten Abluftströme, insbesondere wenigstens doppelt so stark. Besonders günstig ist es, wenn die Versorgungsluftströme einen zweimal bis fünfmal so großen Volumenstrom aufweisen wie die Abluftströme.

Vorzugsweise sind die während es Vereinzelns jeweils herrschenden Druckniveaus in den Abluftkanälen niedriger als in den Versorgungskanälen, insbesondere in den zugehörigen Abschnitten unmittelbar vor Einspeisung in die Dosiervorrichtungen. Dadurch kann ein vergleichsweise großer Förderstrom und somit ein vergleichsweise großer Massenstrom des körnigen Guts, der Abscheidevorrichtung und der Dosiervorrichtung zugeführt werden, ohne die Belegung der Vereinzelungsscheiben mit dem körnigen Gut, insbesondere im Bereich eines in den Dosiervorrichtungen vorhandenen Rührers, zu behindern.

Vorzugsweise werden die Versorgungsluftströme und die Förderluftströme in voneinander getrennten Gebläsen oder mittels einer zentralen Luftstromteilung stromabwärts wenigstens eines gemeinsamen Gebläses erzeugt. Dadurch lassen sich die Förderluftströme und die Versorgungsluftströme im laufenden Arbeitsbetrieb der Sämaschine mittels Steuerung/Regelung flexibel und je nach Bedarf zur Nachführung des körnigen Guts automatisch anpassen.

Bevorzugte Ausführungsformen der Erfindung sind zeichnerisch dargestellt. Es zeigen:
- Fig. 1: eine schematische Darstellung der Sämaschine mit der beschriebenen Luftstromführung;
- Fig. 2: eine schematische Darstellung einer Dosierkammer mit Einspeisung des Versorgungsluftstroms und des Luftstroms;
- Fig. 3: die Sämaschine gemäß Fig. 1 mit einer alternativen zentralen Luftstromführung.

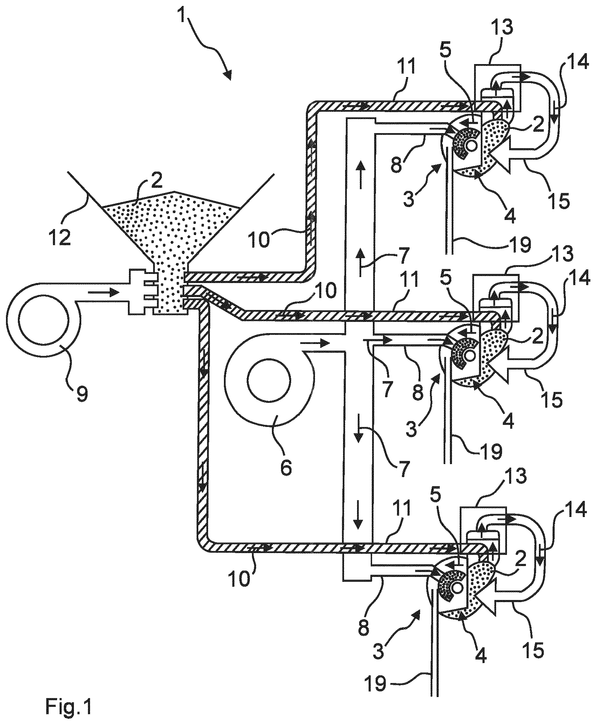

Wie die Fig. 1 erkennen lässt, umfasst die Sämaschine 1 zum Vereinzeln und Ausbringen von körnigem Gut 2, wie beispielsweise Saatgut, Dünger, Pestizid oder dergleichen, mehrere Dosiervorrichtungen 3 mit Dosierkammern 4 und darin angeordneten Vereinzelungsscheiben 5 (durch Drehrichtungspfeil angedeutet) zur Vereinzelung des körnigen Guts 2.

Ferner umfasst die Sämaschine 1 vorzugsweise ein erstes Gebläse 6 zum Erzeugen von Versorgungsluftströmen 7 zur Überdruckbeaufschlagung der einzelnen Dosierkammern 4 über diesen jeweils zugeordnete Versorgungskanäle 8.

Ferner umfasst die Sämaschine 1 vorzugsweise ein zweites Gebläse 9 zum Erzeugen von Förderluftströmen 10 zum Zuführen des körnigen Guts 2 zu den einzelnen Dosiervorrichtungen 3 über diesen jeweils zugeordnete Förderkanäle 11. Das körnige Gut 2 wird zu diesem Zweck auf bekannte Weise in einem zentralen Behälter 12 an der Sämaschine 1 vorgehalten.

Massenstromaufwärts sind an den Dosiervorrichtungen 3 jeweils Abscheidevorrichtungen 13 angeordnet, in denen das in den Förderkanälen 11 zugeführte körnige Gut 2 aus dem damit jeweils beladenen Förderluftstrom 10 abgeschieden wird. Aus der Abscheidung resultieren im Wesentlichen nicht beladene Abluftströme 14, die über Abluftkanäle 15 den jeweils zugeordneten Dosiervorrichtungen 3 zu deren Überdruckbeaufschlagung zugeführt werden.

Die die Versorgungskanäle 8 und die Abluftkanäle 15 münden örtlich voneinander getrennt in die jeweils gemeinsam zugeordneten Dosierkammern 4 und dabei vorzugsweise auch in unterschiedliche Bereiche der Dosierkammern 4.

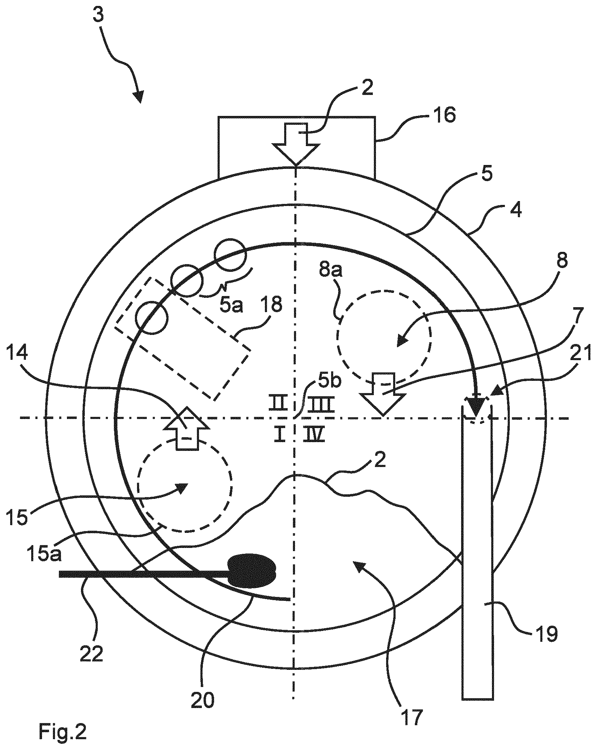

Die Fig. 2 zeigt schematisch eine der Dosierkammern 4 mit darin drehbarer Vereinzelungsscheibe 5. Schematisch dargestellt ist ferner ein Saatgutkanal 16, durch den das körnige Gut 2 von oben aus der Abscheidevorrichtung 13 kommend in die Dosierkammer 4 nachrückt. Das körnige Gut 2 kann sich in einem unteren Sammelbereich 17 innerhalb der Dosierkammer 4 zur anschließenden Vereinzelung ansammeln.

Lediglich abschnittsweise dargestellt sind in der Vereinzelungsscheibe 5 auf bekannte Weise vollumfänglich verteilte Vertiefungen 5a zur Aufnahme / Vereinzelung des körnigen Guts 2 sowie eine Abstreifeinrichtung 18 zum Abstreifen der Vereinzelungsscheibe 5. Der Vollständigkeit halber ist ferner eine Abgabekanal 19 für das vereinzelte körnige Gut 2 angedeutet, siehe auch Fig. 1.

Ausgehend vom Sammelbereich 17 definieren die Vertiefungen 5a einen (durch einen Pfeil angedeuteten) Förderweg 20 der Vereinzelungsscheibe 5. Der Förderweg 20 verläuft im Wesentlichen vom Sammelbereich 17 bis zu einem Abgabepunkt 21, an dem das vereinzelte körnige Gut 2 die Vertiefungen 5a verlässt und durch den Abgabekanal 19 von der Dosiervorrichtung 3 abgegeben wird.

Beispielhaft dargestellt sind ferner eine bezüglich des Förderwegs 20 erste Einspeiseöffnung 15a, an der der Abluftkanal 15 in die Dosierkammer 4 mündet, und eine bezüglich des Förderwegs 20 zweite Einspeiseöffnung 8a, an der der Versorgungskanal 8 in die Dosierkammer 4 mündet.

Sowohl die erste Einspeiseöffnung 15a (des Abluftkanals 15) als auch die Abstreifeinrichtung 18 sind demnach in einem Bereich der Dosierkammer 4 angeordnet, in dem der Förderweg 20 nach oben, also in Richtung auf den Saatgutkanal 16 zu verläuft.

Die zweite Einspeiseöffnung 8a (des Versorgungskanals 8) ist vorzugsweise stromabwärts der ersten Einspeiseöffnung 15a in einem Bereich der Dosierkammer 4 angeordnet, indem der Förderweg 20 der Vereinzelungsscheibe 5 wieder nach unten hin verläuft.

Hilfsweise ist die Dosierkammer 4 in der Fig. 2 bezüglich der Drehachse der 5b der Vereinzelungsscheibe 5 horizontal / vertikal in Quadranten I bis IV aufgeteilt. Wie diesbezüglich zu erkennen ist, liegt die erste Einspeiseöffnung 15a vorzugsweise im, bezogen auf den Förderweg 20, ersten Quadranten I, die Abstreifeinrichtung 18 im diesbezüglich zweiten Quadranten II und die zweite Einspeiseöffnung 8a im diesbezüglich dritten Quadranten III. Alternativ wäre eine Anordnung der ersten Einspeiseöffnung 15a auch im Bereich des zweiten Quadranten II denkbar oder an dessen Übergang zum ersten Quadranten I.

Die separate Einspeisung des Abluftstroms 14 durch die erste Einspeiseöffnung 15a im ansteigenden Teil des Förderwegs 20, also im ersten Quadranten I und/oder zweiten Quadranten II ermöglicht eine besonders zuverlässige Belegung der Vereinzelungsscheibe 5 mit dem körnigen Gut 2 und/oder ein gezieltes Anblasen der Abstreifeinrichtung 18, beispielsweise um von daran vorhandenen Haltern für Abstreifelemente oder dergleichen vorhandene Reste des körnigen Guts 2 zu entfernen.

Demgegenüber ermöglicht die separate Einspeisung des Versorgungsluftstroms 7 durch die stromabwärts liegende Einspeiseöffnung 8a, also insbesondere im dritten Quadranten III, eine separat einstellbare Grundbeaufschlagung der Dosierkammer 4 mit Überdruck zur Vereinzelung des körnigen Guts 2 an der Vereinzelungsscheibe 5.

Vorteilhaft ist in diesem Zusammenhang vor allem die strömungstechnisch direkte Verbindung zwischen der Abscheidevorrichtung 13 und der ersten Einspeiseöffnung 15a über den Abluftkanal 15, sodass sowohl in diesem als auch in der Abscheidevorrichtung 13 ein vergleichsweise niedriges Druckniveau eingestellt werden kann, ohne dadurch den mit dem jeweiligen Förderluftstrom 10 zuführbaren Massenstrom des körnigen Guts 2 in ungünstiger Weise zu beschränken, für den ein bestimmter Druckunterschied zwischen dem den Förderstrom 10 erzeugenden Gebläse 9 und der Abscheidevorrichtung 13 nicht unterschritten werden darf.

Das Druckniveau kann daher in der Abscheidevorrichtung 13 als so niedrig wie in der Dosiervorrichtung 3 gehalten werden. Dies begünstigt eine ordnungsgemäße Belegung der Vereinzelungsscheibe 5 mit dem körnigen Gut 2 und insbesondere auch ein effektives Rühren des körnigen Guts 2 mittels eines in der Fig. 2 lediglich schematisch angedeuteten Rührers 22.

Neben der Verbesserung der Vereinzelungsqualität können so auch die einzelnen Druckluftströme effizienter erzeugt werden als bei der bekannten Zusammenführung der Versorgungsluftströme und Abluftströme stromaufwärts der Dosiervorrichtungen.

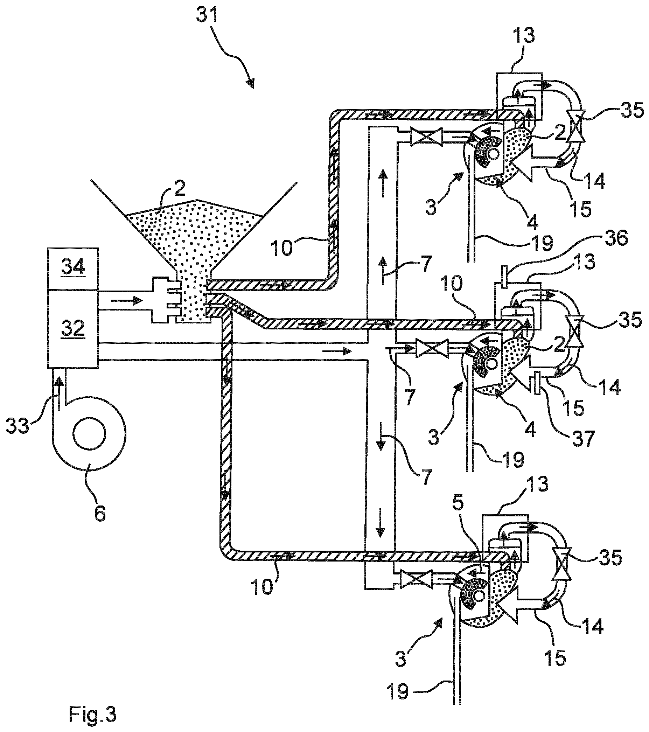

In der Fig. 3 ist die Sämaschine 31 beispielhaft als alternative Ausführungsform dargestellt, die sich im Wesentlichen nur durch die zentrale Luftversorgung von den voranstehend beschriebenen Sämaschine 1 unterscheidet. Demnach kommt die Sämaschine 31 ohne separate Gebläse für die Versorgungsluftströme 7 und die Förderluftströmen 10 aus. Stattdessen kann hierfür beispielsweise nur das erste Gebläse 6 oder das zweite Gebläse 9 vorhanden sein sowie ein stromabwärts davon angeordneter zentraler Luftverteiler 32, der einen (hier beispielhaft vom Gebläse 6 erzeugten) Gesamtluftstrom 33 in die Versorgungsluftströme 7 und die Förderluftströme 10 aufteilt.

Zu diesem Zweck ist vorzugsweise sowohl das Gebläse 6 als auch der zentrale Luftverteiler 32 über eine beispielhaft dargestellte Steuerung 34 steuerbar / regelbar, sodass zum einen der Gesamtluftstrom 33 eingestellt werden kann und zum anderen auch dessen Aufteilung auf die Versorgungsluftströme 7 und die Förderluftströme 10.

Optional könnte in jedem der Abluftkanäle 15 und der Versorgungskanäle 8 zudem ein Ventil 35 zur Abschwächung des durchgeleiteten Abluftstroms 14 bzw. Versorgungsluftstroms 7 vorhanden sein. Dadurch ließe sich wahlweise der jeweilige Abluftstrom 14 und/oder der Versorgungsluftstrom 7 unabhängig von dem in der zugeordneten Abscheidevorrichtung 13 eingangsseitig herrschenden Druckniveau zusätzlich abschwächen. Somit ist ein Mischungsverhältnis aus den einzelnen Dosiervorrichtungen 3 jeweils zugeführten Abluftstrom 14 und Versorgungsluftstrom 7 einstellbar.

Schematisch angedeutet sind ferner Messeinrichtungen 36, 37 zum Messen eines Überdrucks in wenigstens einer der Abscheidevorrichtungen 13 und/oder zum Messen eines Volumenstroms in wenigstens einer der Abluftkanäle 15. Damit ließen sich die Abluftströme 14 gezielt unter unterschiedlichen Arbeitsbedingungen im Bereich der Abscheidevorrichtungen 13 steuern / regeln.

Es versteht sich hierbei von selbst, dass die lediglich in der Fig. 3 beispielhaft dargestellte Steuerung 34, die Ventile 35 und/oder die Messeinrichtungen 36, 37 auch bei der zuvor beschriebenen Sämaschine 1 vorhanden ist/sind, um beispielsweise die Gebläse 6, 9 und somit die damit separat erzeugten Versorgungsluftströme 7, Förderluftströme 10 und schließlich auch die Abluftströme 14 zu steuern / regeln.

Im Arbeitsbetrieb der Sämaschine 1, 31 sind die in die Dosierkammern 4 jeweils eingespeisten Versorgungsluftströme 7 vorzugsweise stärker als die gleichzeitig eingespeisten Abluftströme 14. Als vorteilhaft hat sich herausgestellt, wenigstens eines der Gebläse 6, 9 und/oder den zentralen Luftverteiler 32 und/oder die Ventile 35 derart einzustellen, dass die Versorgungsluftströme 7 jeweils wenigstens doppelt so stark sind wie die zugeordneten Abluftströme 14. Als besonders praktikabel hat sich ein Verhältnis von 1:2 bis 1:5 des jeweils eingespeisten Abluftstroms 14 zum jeweils in dieselbe Dosiervorrichtung 3 eingespeisten Versorgungsluftstrom 7 herausgestellt. Diese Angabe bezieht sich vorzugsweise auf das Verhältnis der jeweiligen Volumenströme.

Damit lässt sich die Vereinzelungsqualität des schließlich von der Sämaschine 1, 31 abgegeben körnigen Guts 2, also in den einzelnen Abgabekanälen 19, vergleichsweise flexibel optimieren, beispielsweise hinsichtlich unterschiedlicher körniger Güter 2 und/oder Einsatzbedingungen.

## Patentansprüche

1. Sämaschine (1, 31) zum Vereinzeln und Ausbringen von körnigem Gut (2) wie Saatgut, Dünger oder Pestizid, umfassend:
- Dosiervorrichtungen (3) mit Dosierkammern (4) und darin angeordneten Vereinzelungsscheiben (5) zur Vereinzelung des körnigen Guts;
- wenigstens ein Gebläse (6, 9) zum Erzeugen von Versorgungsluftströmen (7) zur Überdruckbeaufschlagung der einzelnen Dosierkammern (3) über diesen jeweils zugeordnete Versorgungskanäle (8) und zum Erzeugen von Förderluftströmen (10) zum Zuführen des körnigen Guts aus einem zentralen Behälter (12) zu den einzelnen Dosiervorrichtungen über diesen jeweils zugeordnete Förderkanäle (11); und
- Abscheidevorrichtungen (13), die im Bereich der Dosiervorrichtungen diesen jeweils vorgeschaltet sind, um das in den Förderkanälen zugeführte körnige Gut aus dem jeweiligen Förderluftstrom abzuscheiden und daraus resultierende Abluftströme (14) über Abluftkanäle (15) den jeweils zugeordneten Dosiervorrichtungen zur deren Überdruckbeaufschlagung bereitzustellen,
wobei die Versorgungskanäle und die Abluftkanäle voneinander getrennt in die diesen jeweils gemeinsam zugeordneten Dosierkammern münden
**dadurch gekennzeichnet, dass** die Sämaschine ferner wenigstens einen stromabwärts des Gebläses (6, 9) angeordneten Luftverteiler (32) zum Einstellen der Förderluftströme (10) und der Versorgungsluftströme (7) derart umfasst, dass der den einzelnen Dosiervorrichtungen (3) jeweils zugeführte Abluftstrom (14) schwächer ist als der jeweils zugeführte Versorgungsluftstrom (7), insbesondere höchstens halb so stark, oder
dass die Sämaschine wenigstens ein erstes Gebläse (6) zum Erzeugen der Versorgungsluftströme (7) und wenigstens ein unabhängig davon einstellbares zweites Gebläse (9) zum Erzeugen der Förderluftströme (10) umfasst, wobei das erste und zweite Gebläse derart ausgebildet und steuerbar sind, dass der den einzelnen Dosiervorrichtungen (3) jeweils zugeführte Abluftstrom (14) schwächer ist als der jeweils zugeführte Versorgungsluftstrom (7), insbesondere höchstens halb so stark.

2. Sämaschine nach Anspruch 1, wobei die Abluftkanäle (15), bezogen auf einen Förderweg (20) der Vereinzelungsscheiben (5), stromaufwärts der Versorgungskanäle (8) in die Dosierkammern (4) münden.

3. Sämaschine nach Anspruch 1 oder 2, wobei die Abluftkanäle (15) in Teilbereiche der Dosierkammern (4) münden, in denen ein Förderweg (20) der Vereinzelungsscheiben (5) nach oben hin verläuft.

4. Sämaschine nach Anspruch 1, 2 oder 3, wobei in den Dosierkammern (4) Abstreifeinrichtungen (18) zum Abstreifen der Vereinzelungsscheiben (5) angeordnet sind und die Abluftkanäle (15), bezogen auf einen Förderweg (20) der Vereinzelungsscheiben, stromaufwärts der Abstreifeinrichtungen und/oder in deren Bereich einmünden.

5. Sämaschine nach einem der vorigen Ansprüche, ferner mit den Abluftkanälen (15) und/oder Versorgungskanälen (8) zugeordneten Ventilen (35) zum einstellbaren Abschwächen der Abluftströme (14) und/oder Versorgungsluftströme (7) derart, dass ein Mischungsverhältnis aus den einzelnen Dosiervorrichtungen (3) jeweils zugeführten Abluftstrom (14) und Versorgungsluftstrom (7) einstellbar ist.

6. Sämaschine nach wenigstens einem der vorigen Ansprüche, ferner mit wenigstens einer Messeinrichtung (36, 37) zum Messen eines Volumenstroms und/oder eines Überdrucks in wenigstens einer der Abscheidevorrichtungen (13) und/oder Abluftkanäle (14).

7. Verfahren zum Vereinzeln und Ausbringen von körnigem Gut (2), wie Saatgut, Dünger oder Pestizid, wobei das körnige Gut aus einem zentralen Behälter (12) einzelnen Dosiervorrichtungen (3) über diesen jeweils zugeordnete Förderkanäle (11) mittels Förderluftströmen (10) zugeführt wird, wobei das in den Förderkanälen zugeführte körnige Gut aus dem jeweiligen Förderluftstrom abgeschieden wird und daraus resultierende Abluftströme (14) über Abluftkanäle (15) den jeweils zugeordneten Dosiervorrichtungen zugeführt und diese dadurch mit Überdruck beaufschlagt werden, wobei die Dosiervorrichtungen über diesen jeweils zugeordnete Versorgungskanäle (8) mittels Versorgungsluftströmen (7) mit Überdruck beaufschlagt werden, und wobei das körnige Gut in den Dosiervorrichtungen mittels Vereinzelungsscheiben (5) vereinzelt wird,
wobei die Versorgungsluftströme und die Abluftströme örtlich voneinander getrennt in die Dosiervorrichtungen eingespeist werden,
**dadurch gekennzeichnet, dass** die eingespeisten Versorgungsluftströme (7) stärker sind als die eingespeisten Abluftströme (14), insbesondere wenigstens doppelt so stark.

8. Verfahren nach Anspruch 7, wobei die Abluftströme (14), bezogen auf einen Förderstrom (20) des körnigen Guts (2) an den Vereinzelungsscheiben (5) stromaufwärts der Versorgungsluftströme (7) eingespeist werden.

9. Verfahren nach Anspruch 7 oder 8, wobei die Abluftströme (14) auf in den Dosiervorrichtungen (3) vorhandene Abstreifeinrichtungen (18) für die Vereinzelungsscheiben (5) und/oder stromaufwärts davon gelegene Teilbereiche der Dosiervorrichtungen gerichtet werden.

10. Verfahren nach einem der Ansprüche 7 bis 9, wobei die eingespeisten Versorgungsluftströme (7) einen zweimal bis fünfmal so großen Volumenstrom als die eingespeisten Abluftströme (14) aufweisen.

11. Verfahren nach einem der Ansprüche 7 bis 10, wobei während des Vereinzelns jeweils herrschende Druckniveaus in den Abluftkanälen (15) niedriger sind als in den Versorgungskanälen (7), insbesondere in zugehörigen Abschnitten unmittelbar vor Einspeisung in die Dosiervorrichtungen (3).

12. Verfahren nach einem der Ansprüche 7 bis 11, wobei die Versorgungsluftströme (7) und die Förderluftströme (10) mittels voneinander getrennter Gebläse (6, 9) oder durch zentrale Luftstromteilung stromabwärts wenigstens eines Gebläses zur Erzeugung eines gemeinsamen Gesamtluftstroms (33) erzeugt werden.

## Claims

1. Seed drill (1, 31) for singling and spreading granular material (2) such as seed, fertilizer or pesticide, comprising:
- metering apparatuses (3) having metering chambers (4) and singling disks (5) arranged therein for singling the granular material;
- at least one blower (6, 9) for generating supply air flows (7) for overpressurizing the individual metering chambers (3) via supply ducts (8) assigned to each of the metering chambers, and for generating conveying airflows (10) for supplying the granular material from a central container (12) to the individual metering apparatuses via conveying conduits (11) assigned to each of the metering apparatuses; and
- separating apparatuses (13) which are positioned in the region of the metering apparatuses, in each case upstream thereof, in order to separate the granular material supplied in the conveying conduits from the corresponding conveying air flow and to provide resulting exhaust air flows (14) via exhaust air ducts (15) to the metering apparatuses assigned to each of the exhaust air ducts in order to overpressurize the metering apparatuses,
the supply ducts and the exhaust air ducts opening separately into the metering chambers jointly assigned to each of them,
**characterized in that** the seed drill further comprises at least one air distributor (32), arranged downstream of the blower (6, 9), for adjusting the conveying air flows (10) and the supply air flows (7) such that the exhaust air flow (14) supplied to each of the individual metering apparatuses (3) is weaker than the supply air flow (7) supplied in each case, in particular at most half as strong, or
**in that** the seed drill comprises at least a first blower (6) for generating the supply air flows (7) and at least one independently adjustable second blower (9) for generating the conveying air flows (10), the first and second blowers being designed and controllable in such a way that the exhaust air flow (14) supplied to each of the individual metering apparatuses (3) is weaker than the supply air flow (7) supplied in each case, in particular at most half as strong.

2. Seed drill according to claim 1, wherein the exhaust air ducts (15), with respect to a conveying path (20) of the singling disks (5), open into the metering chambers (4) upstream of the supply ducts (8).

3. Seed drill according to claim 1 or 2, wherein the exhaust air ducts (15) open into subregions of the metering chambers (4) in which a conveying path (20) of the singling disks (5) runs upward.

4. Seed drill according to claim 1, 2 or 3, wherein scraping devices (18) for scraping the singling disks (5) are arranged in the metering chambers (4), and the exhaust air ducts (15), with respect to a conveying path (20) of the singling disks, discharge upstream of the scraping devices and/or into the region thereof.

5. Seed drill according to any of the preceding claims, further comprising valves (35) assigned to the exhaust air ducts (15) and/or supply ducts (8) for adjustably attenuating the exhaust air flows (14) and/or supply air flows (7) such that a mixing ratio of the exhaust air flow (14) and supply air flow (7), which are each supplied to the individual metering apparatuses (3), is adjustable.

6. Seed drill according to at least one of the preceding claims, further comprising at least one measuring device (36, 37) for measuring a volume flow rate and/or an overpressure in at least one of the separating apparatuses (13) and/or exhaust air ducts (14).

7. Method for singling and spreading granular material (2), such as seed, fertilizer or pesticide, the granular material being supplied by means of conveying air flows (10) from a central container (12) to individual metering apparatuses (3) via conveying conduits (11) assigned to each of these metering apparatuses, the granular material supplied in the conveying conduits being separated from the corresponding conveying air flow and resulting exhaust air flows (14) being supplied via exhaust air ducts (15) to the metering apparatuses assigned in each case and thus being overpressurized, the metering apparatuses being overpressurized by means of supply air flows (7) via supply ducts (8) assigned to each of the metering devices, and the granular material being singled in the metering apparatuses by means of singling disks (5),
the supply air flows and the exhaust air flows being spatially separately fed into the metering apparatuses,
**characterized in that** the fed-in supply air flows (7) are stronger than the fed-in exhaust air flows (14), in particular at least twice as strong.

8. Method according to claim 7, wherein the exhaust air flows (14), with respect to a conveying flow (20) of the granular material (2) at the singling disks (5), are fed in upstream of the supply air flows (7).

9. Method according to claim 7 or 8, wherein the exhaust air flows (14) are directed toward scraping devices (18) for the singling disks (5), which scraping devices are in the metering apparatuses (3), and/or toward subregions of the metering apparatuses, which subregions are upstream of the scraping devices.

10. Method according to any of claims 7 to 9, wherein the fed-in supply air flows (7) have a volume flow rate two to five times greater than the fed-in exhaust air flows (14).

11. Method according to any of claims 7 to 10, wherein, during singling, pressure levels prevailing in each case in the exhaust air ducts (15) are lower than in the supply ducts (7), in particular in associated portions immediately before feeding into the metering apparatuses (3).

12. Method according to any of claims 7 to 11, wherein the supply air flows (7) and the conveying air flows (10) are generated by means of separate blowers (6, 9) or by central airflow division downstream of at least one blower in order to generate a common total airflow (33).

## Revendications

1. Semoir (1, 31) permettant de séparer et d'épandre une matière granulaire (2) telle que des semences, des engrais ou des pesticides, comprenant :
- des dispositifs de dosage (3) comportant des chambres de dosage (4) et des disques de séparation (5) disposés dans celles-ci pour la séparation de la matière granulaire ;
- au moins une soufflante (6, 9) permettant de générer des flux d'air d'alimentation (7) pour la surpressurisation des différentes chambres de dosage (3) par l'intermédiaire de canaux d'alimentation (8) respectivement associés à celles-ci, et de générer des flux d'air de transport (10) pour l'amenée de la matière granulaire depuis un récipient central (12) vers les différents dispositifs de dosage par l'intermédiaire de canaux de transport (11) respectivement associés à ceux-ci ; et
- des dispositifs de séparation (13) qui, dans la zone des dispositifs de dosage, sont respectivement montés en amont de ceux-ci, afin de séparer la matière granulaire amenée dans les canaux de transport du flux d'air de transport respectif et de fournir les flux d'air d'évacuation (14) qui en résultent par l'intermédiaire de canaux d'évacuation d'air (15) aux dispositifs de dosage respectivement associés en vue de leur surpressurisation,
dans lequel les canaux d'alimentation et les canaux d'évacuation d'air débouchent séparément les uns des autres dans les chambres de dosage qui leur sont respectivement associées conjointement
**caractérisé en ce que** le semoir comprend en outre au moins un distributeur d'air (32) disposé en aval de la soufflante (6, 9) et permettant de régler les flux d'air de transport (10) et les flux d'air d'alimentation (7) de telle sorte que le flux d'air d'évacuation (14) amené respectivement aux différents dispositifs de dosage (3) soit plus faible que le flux d'air d'alimentation (7) amené respectivement, en particulier au maximum deux fois moins fort, ou
**en ce que** le semoir comprend au moins une première soufflante (6) permettant de générer les flux d'air d'alimentation (7) et au moins une seconde soufflante (9) réglable indépendamment de la première et permettant de générer les flux d'air de transport (10), dans lequel la première et la seconde soufflante sont conçues et peuvent être commandées de telle sorte que le flux d'air d'évacuation (14) amené respectivement aux différents dispositifs de dosage (3) soit plus faible que le flux d'air d'alimentation (7) amené respectivement, en particulier au maximum deux fois moins fort.

2. Semoir selon la revendication 1, dans lequel les canaux d'évacuation d'air (15) débouchent dans les chambres de dosage (4) en amont des canaux d'alimentation (8) par rapport à un trajet de transport (20) des disques de séparation (5).

3. Semoir selon la revendication 1 ou 2, dans lequel les canaux d'évacuation d'air (15) débouchent dans des zones partielles des chambres de dosage (4), zones partielles dans lesquelles un trajet de transport (20) des disques de séparation (5) s'étend vers le haut.

4. Semoir selon la revendication 1, 2 ou 3, dans lequel des appareils de raclage (18) sont disposés dans les chambres de dosage (4) pour le raclage des disques de séparation (5) et les canaux d'évacuation d'air (15) débouchent, par rapport à un trajet de transport (20) des disques de séparation, en amont des appareils de raclage et/ou dans leur zone.

5. Semoir selon l'une des revendications précédentes, comportant en outre des soupapes (35) associées aux canaux d'évacuation d'air (15) et/ou aux canaux d'alimentation (8) et permettant de réduire de manière réglable les flux d'évacuation d'air (14) et/ou les flux d'alimentation d'air (7) de telle sorte qu'un rapport de mélange entre le flux d'air d'évacuation (14) et le flux d'air d'alimentation (7) amenés respectivement aux différents dispositifs de dosage (3) est réglable.

6. Semoir selon au moins l'une des revendications précédentes, comportant en outre au moins un appareil de mesure (36, 37) permettant de mesurer un flux volumique et/ou une surpression dans au moins l'un des dispositifs de séparation (13) et/ou des canaux d'évacuation d'air (14).

7. Procédé permettant de séparer et d'épandre une matière granulaire (2) telle que des semences, des engrais ou des pesticides, dans lequel la matière granulaire est acheminée, à l'aide de flux d'air de transport (10), à partir d'un réservoir central (12) vers des dispositifs de dosage (3) individuels par l'intermédiaire de canaux de transport (11) qui leur sont respectivement associés, dans lequel la matière granulaire amenée dans les canaux de transport est séparée du flux d'air de transport respectif et des flux d'air d'évacuation (14) qui en résultent sont amenés par des canaux d'évacuation d'air (15) aux dispositifs de dosage respectivement associés et ces flux d'air d'évacuation sont ainsi soumis à une surpression, dans lequel les dispositifs de dosage sont soumis, à l'aide de flux d'air d'alimentation (7), à une surpression par des canaux d'alimentation (8) respectivement associés à ceux-ci, et dans lequel la matière granulaire est séparée dans les dispositifs de dosage à l'aide de disques de séparation (5),
dans lequel les flux d'air d'alimentation et les flux d'air d'évacuation sont introduits localement et séparément dans les dispositifs de dosage,
**caractérisé en ce que** les flux d'air d'alimentation (7) injectés sont plus forts que les flux d'air d'évacuation (14) injectés, en particulier au moins deux fois plus forts.

8. Procédé selon la revendication 7, dans lequel les flux d'air d'évacuation (14), par rapport à un flux de transport (20) de la matière granulaire (2), sont injectés au niveau des disques de séparation (5) en amont des flux d'air d'alimentation (7).

9. Procédé selon la revendication 7 ou 8, dans lequel les flux d'air d'évacuation (14) sont dirigés vers des appareils de raclage (18) présents dans les dispositifs de dosage (3) pour les disques de séparation (5) et/ou des zones partielles des dispositifs de dosage, lesquelles zones partielles sont situées en amont des disques de séparation.

10. Procédé selon l'une des revendications 7 à 9, dans lequel les flux d'air d'alimentation (7) injectés présentent un flux volumique deux à cinq fois plus important que les flux d'air d'évacuation (14) injectés.

11. Procédé selon l'une des revendications 7 à 10, dans lequel, pendant la séparation, des niveaux de pression qui prévalent respectivement dans les canaux d'évacuation d'air (15) sont inférieurs à ceux qui prévalent dans les canaux d'alimentation (7), en particulier dans des sections associées immédiatement avant leur injection dans les dispositifs de dosage (3).

12. Procédé selon l'une des revendications 7 à 11, dans lequel les flux d'air d'alimentation (7) et les flux d'air de transport (10) sont générés à l'aide de soufflantes (6, 9) séparées les unes des autres ou par division centrale du flux d'air en aval d'au moins une soufflante pour la génération d'un flux d'air total (33) conjoint.
